# EUROPÄISCHE PATENTSCHRIFT

(11) **EP 0 545 142 B1**
(45) Veröffentlichungstag und Bekanntmachung des Hinweises auf die Patenterteilung: **31.05.1995**
(21) Anmeldenummer: 92119670.5
(22) Anmeldetag: 19.11.1992
(51) Int. Cl.: B27C 5/10, B23Q 35/10

(54) **Handfräse**
Router
Fraiseuse portative

(30) Priorität: 29.11.1991 DE 4139344
(43) Veröffentlichungstag der Anmeldung: 09.06.1993
(73) Patentinhaber: ROBERT BOSCH GMBH, 70442 Stuttgart (DE)
(72) Erfinder: Fuchs, Rudolf, W-7303 Neuhausen (DE); Boeck, Cornelius, W-7022 Leinfelden-Echterdingen (DE); Martinez, David M., New Bern, N.C. 28562 (US); Roberts, Bruce, New Bern, N.C. 28562 (US)

(56) Entgegenhaltungen:
- DE-U- 9 000 210
- US-A- 1 899 883
- US-A- 3 312 258
- US-A- 4 105 359

## Beschreibung

### Stand der Technik

Die Erfindung geht aus von einer Handfräse nach dem Oberbegriff des Anspruchs 1. Aus der US 1 745 780 ist bereits eine Handfräse mit einer um das Fräswerkzeug herum angeordneten Führungshülse bekannt, mittels derer entlang einer auf das Werkstück aufzulegenden Schablone gefräst werden kann. Die dort gezeigte Führungshülse ist mit einem Verbindungsbolzens an der Unterseite des Motorgehäuses befestigt. Dies erschwert wegen der schlechten Zugänglichkeit des Bolzens die Befestigung und die Demontage der Führungshülse. Außerdem besteht die Gefahr, daß der Verbindungsbolzen bei nicht benutzter Führungshülse verloren geht.

### Vorteile der Erfindung

Die erfindungsgemäße Handfräse mit den kennzeichnenden Merkmalen des Anspruchs 1 hat demgegenüber den Vorteil, daß die durch Reibung an einer Schablone auf Drehung beanspruchte Führungshülse einfach und sicher mit dem Motorgehäuse verbunden und wieder demontiert werden kann. Der Bajonettverschluß ist so ausgeführt, daß sich die Führungshülse während des Entlangführens an einer Schablone nicht verdrehen und nicht lösen kann. Dies wird insbesondere dadurch erreicht, daß der drehbare Teil des Bajonettverschlusses als Spannring in die Fußplatte integriert ist.

Durch die in den abhängigen Ansprüchen aufgeführten Maßnahmen sind vorteilhafte Weiterbildungen und Verbesserungen der im Anspruch 1 angegebenen Handfräse möglich. Besonders vorteilhaft ist es, wenn der Spannring durch eine Feder in seine die Führungshülse fixierende Endstellung gedrängt wird. Ein fester Halt der Führungshülse wird dadurch erreicht, daß diese insbesondere abgeschrägte Klemmflächen aufweist, die zwischen Spannocken am Spannring und Anschlägen an der Fußplatte zu liegen kommen. Gegen Verdrehen ist die Führungshülse durch Einkerbungen und Vorsprünge an den Anschlägen der Fußplatte gesichert. Vorteilhafterweise ist der Spannring mit einer Handhabe zum Verdrehen entgegen der Zugrichtung der Feder versehen, die seitlich der Öffnung aus der Fußplatte hervorragt.

### Zeichnung

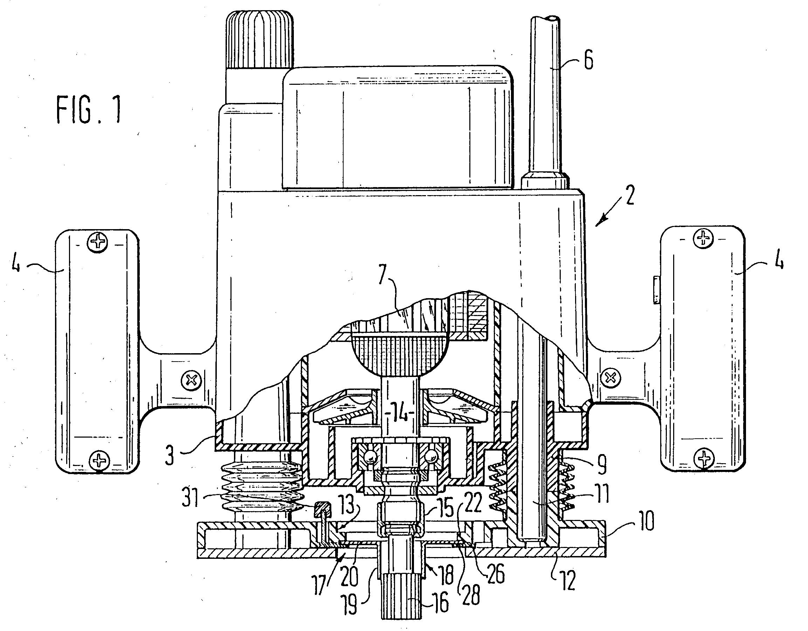

Ein Ausführungsbeispiel der Erfindung dargestellt und in der nachfolgenden Beschreibung näher erläutert. Figur 1 zeigt einen Längsschnitt durch eine Handfräse. Figur 2 zeigt eine Ansicht eines Spannrings mit Führungshülse aus Blickrichtung II in Figur 3, Figur 3 zeigt einen Schnitt durch eine Steckverbindung und die Figuren 4 und 5 zeigen eine Führungshülse.

### Beschreibung des Ausführungsbeispiels

Die als Oberfräse ausgeführte Handfräse 2 besteht aus einem mehrteiligen Motorgehäuse 3 aus Aluminium und/oder aus Kunststoff. An dem Gehäuse 3 sitzen zwei Handgriffe 4, wobei in einen der Handgriffe ein elektrischer Schalter 5 eingebaut ist. Der Schalter 5 ist mit der Netzanschlußleitung 6 und dem Antriebsmotor 7 elektrisch verbunden.

Das Gehäuse 3 weist senkrecht ausgerichtete Führungsrohre 9 auf, die an zwei ebenfalls senkrecht von einer Fußplatte 10 wegstehenden Führungssäulen 11 geführt sind. Die Fußplatte 10 aus Aluminium ist zum Schutz des zu bearbeitenden Werkstücks mit einer Kunststoffsohle 12 ausgestattet. Fußplatte 10 und Sohle 12 haben zentral eine Öffnung 13, in die hinein eine vom Motor 7 angetriebene Spindel 14 ragt. Die Spindel 14 ist an ihrem unteren Ende mit einer Werkzeugaufnahme, insbesondere Spannhülse 15 ausgestattet. Darin ist auswechselbar ein Fräswerkzeug 16 gehalten. Das Motorgehäuse 3 ist entlang den Säulen 11 gegenüber der Fußplatte 10 verschieblich, so daß ein in die Spannhülse 15 eingesetztes Werkzeug 16 mehr oder weniger weit in das zu bearbeitende Werkstück eintaucht.

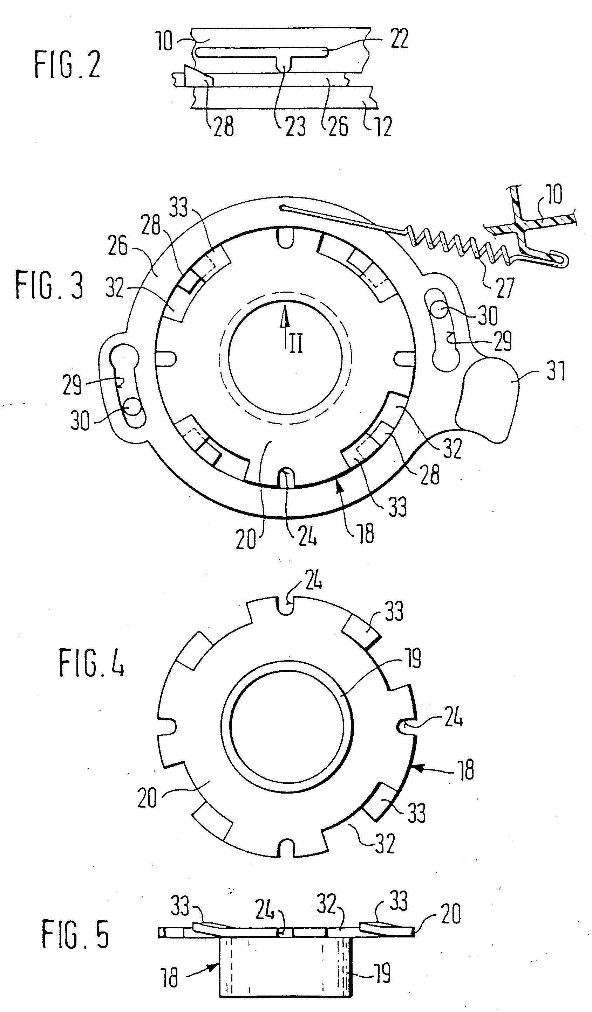

In der Öffnung 13 ist eine Steckvorrichtung 17 zur Aufnahme einer Führungshülse 18 angebracht. Diese besteht aus einem rohrförmigen, das Werkzeug 16 umgebenden Führungsteil 19 und einem daran angeformten, radial abstehenden Kragen 20. Der Führungsteil 19 ist austauschbar und kann je nach dem verwendeten Werkzeug unterschiedliche Durchmesser aufweisen. Der Kragen 20 liegt mit seinem äußeren Rand an in die Öffnung 13 hineinragenden Anschlägen 22 der Fußplatte 10 an. Im Ausführungsbeispiel sind vier Anschläge 22 vorgesehen. An diesen ist jeweils ein nach unten gerichteter, in Achsrichtung der Öffung 13 verlaufender Vorsprung 23 angebracht, der in zugeordnete Einkerbungen 24 am Rand der Führungshülse 18 eingreift, um ein Verdrehen der Führungshülse 18 gegenüber der Fußplatte 10 zu verhindern (siehe auch Figuren 2 und 4).

Die Führungshülse 18 wird von einem drehbaren Spannring 26 in fester Anlage an den Anschlägen 22 gehalten. Der Spannring 26 ist zwischen die Fußplatte 10 und die Sohle 12 eingelegt und wird von einer an der Fußplatte gehaltenen, insbesondere in eine Rippe der Fußplatte eingehängten Zugfeder 27 in seine verriegelungsseitige Endlage gedrängt. Von dem Spannring 26 stehen radial nach innen vier Spannocken 28 hervor, die zu den Anschlägen 22 hin abgeschrägt sind und die Führungshülse 18 halten. Der Spannring 26 weist außerdem zwei sich in Umfangsrichtung erstreckende Langlöcher 29 auf, in die an der Fußplatte 10 befestigte Führungsstifte 30 eingreifen. In Achsrichtung nach oben weg ragt eine Handhabe 31 durch einen gebogenen Schlitz in der Fußplatte 10 hindurch.

Die Führungshülse 18 hat an ihrem Kragen 20 neben den Einkerbungen 24 für die Verdrehsicherung Aussparungen 32 zum Durchtritt der Spannocken 28. An die Aussparungen 32 schließen sich Klemmflächen 33 an, die aus der Ebene des Kragens 20 leicht nach oben abgebogen sind (vgl. Figur 5). Damit stehen die Klemmflächen 33 wie die Spannocken 28 schräg zur Drehebene des Spannrings 26.

Anschläge 22, Spannring 26 und Kragen 20 der Führungshülse 18 bilden zusammen einen Bajonettverschluß 34. Die Montage der Führungshülse 18 erfolgt durch einfaches Einstecken der Hülse 18 in die Öffnung 13 bei entriegeltem, d. h. gegenüber der Darstellung in Figur 2 um ca. 40° nach links gedrehtem Spannring 26. Dabei wird der Kragen 20 mit seinen Ausnehmungen 32 über die seitwärts versetzten Spannocken 28 geschoben. Sobald die Führungshülse 18 an den Anschlägen 22 anliegt und die Vorsprünge 23 in die Einkerbungen 24 eingreifen, wird die Handhabe 31 losgelassen. Dann dreht sich der Spannring 26 unter Federkraft zurück in seine in Figur 3 gezeigte Verriegelungsstellung und klemmt die schrägen Klemmflächen 33 mit seinen abgeschrägten Spannocken 28 gegen die Anschläge 22. Die Abschrägungen sorgen dabei für eine dauerhaft zuverlässige Fixierung der Führungshülse 18. Die Schrägen sind so ausgelegt, daß der Spannring 26 bei eingesetzter Führungshülse 18 nicht ganz bis in seine in Figur 2 gezeigte Endlage zurückkehrt, wie an der Lage der Stifte 30 in den Langlöchern 29 zu sehen ist. Dadurch ist bei Arbeiten entlang von Schablonen eine stabile Führung sichergestellt. Die Führungshülse 18 wird weder beim Einsetzen noch später bei der Benutzung der Fräse 2 gedreht und kann sich daher auch nicht selbsttätig lösen.

Zur Demontage oder zum Wechseln der Führungshülse 18 wird nur der Spannring 26 an seiner Handhabe 31 um ca. 40° verdreht und die Hülse 18 kann mühelos axial entnommen werden. Die Fräse kann selbstverständlich auch ohne Führungshülse verwendet werden.

## Patentansprüche

1. Handfräse (2) mit einem Motorgehäuse (3) und einer an ein Werkstück anlegbaren Fußplatte (10) mit einer zentralen Öffnung (13) zum Durchtritt eines Fräswerkzeugs (16), das in einer Werkzeugaufnahme (15) an der Unterseite des Motorgehäuses (3) angeordnet ist und mit einer um das Fräswerkzeug herum angeordneten abnehmbaren Führungshülse (18), die in montiertem Zustand über die Fußplatte hinausragt, dadurch gekennzeichnet daß die Führungshülse (18) mittels einer Steckverbindung (17) mit Bajonettverschlusses (34) mit der Fußplatte (10) verbindbar ist.

2. Handfräse nach Anspruch 1, dadurch gekennzeichnet, daß mit der Fußplatte (10) ein um einen begrenzten Winkelbetrag drehbarer Spannring (26) mit mehreren Spannocken (28) verbunden ist.

3. Handfräse nach Anspruch 2, dadurch gekennzeichnet, daß der Spannring (26) durch eine Feder (27) in eine seine verriegelungsseitige Endlage gedrängt wird.

4. Handfräse nach Anspruch 2 oder 3, dadurch gekennzeichnet, daß die Fußplatte (10) im Bereich ihrer Öffnung (13) mit den Spannocken (28) des Spannrings (26) zusammenwirkende, in axialer Richtung wirksame Anschläge (22) aufweist.

5. Handfräse nach Anspruch 4, dadurch gekennzeichnet, daß die einsetzbare Führungshülse (18) Klemmflächen (33) aufweist, die zwischen die Spannocken (28) und die Anschläge (22) einführbar sind.

6. Handfräse nach einem der Ansprüche 2 bis 5, dadurch gekennzeichnet, daß die Führungshülse (18) Aussparungen (32) zum Durchtritt der Spannocken (28) aufweist.

7. Handfräse nach Anspruch 5, dadurch gekennzeichnet, daß die Spannocken (28), die Anschläge (22) oder die Klemmflächen (33) oder mehrere dieser Bauteile abgeschrägt sind.

8. Handfräse nach einem der Ansprüche 4, 5 oder 7, dadurch gekennzeichnet, daß die Anschläge (22) und die Führungshülse (18) am Rand Passungselemente in Form von radialen oder axialen Vorsprüngen (23) und Aussparungen (24) aufweisen, die ein Verdrehen in Umfangsrichtung unterbinden.

9. Handfräse nach einem der Ansprüche 3 bis 5, 7 und 8, dadurch gekennzeichnet, daß der Spannring (26) mit einer Handhabe (31) zum Verdrehen entgegen der Zugrichtung der Feder (27) versehen ist, die vorzugsweise seitlich der Öffnung (13) aus der Fußplatte (10) hervorragt.

## Claims

1. Hand milling machine (2) comprising a motor casing (3) and a base plate (10) which can be laid against a workpiece and has a central opening (13) for the passage of a milling tool (16) which is arranged in a toolholder (15) on the underside of the motor casing (3), and also comprising a detachable guide sleeve (18) which is arranged around the milling tool and which in the assembled state projects beyond the base plate, characterized in that the guide sleeve (18) can be connected by means of a plug-in connection (17) having a bayonet fastening (34) to the base plate (10).

2. Hand milling machine according to Claim 1, characterized in that a clamp ring (26) which is rotatable through a limited angle and which has a plurality of clamp cams (28) is connected to the base plate (10).

3. Hand milling machine according to Claim 2, characterized in that the clamp ring (26) is forced by a spring (27) into its locking side end position.

4. Hand milling machine according to Claim 2 or 3, characterized in that in the region of its opening (13) the base plate (10) has stops (22) acting in the axial direction and cooperating with the clamp cams (28) of the clamp ring (26).

5. Hand milling machine according to Claim 4, characterized in that the insertable guide sleeve (18) has clamping surfaces (33) which can be introduced between the clamp cams (28) and the stops (22).

6. Hand milling machine according to one of Claims 2 to 5, characterized in that the guide sleeve (18) has recesses (32) for the passage of the clamp cams (28).

7. Hand milling machine according to Claim 5, characterized in that the clamp cams (28), the stops (22) or the clamping surfaces (33) or a plurality of these components are bevelled.

8. Hand milling machine according to one of Claims 4, 5 or 7, characterized in that the stops (22) and the guide sleeve (18) have fitting elements at the edge which are in the form of radial or axial projections (23) and recesses (24) and which prevent rotation in the circumferential direction.

9. Hand milling machine according to one of Claims 3 to 5, 7 and 8, characterized in that in that the clamp ring (26) is provided with a handle (31) for turning oppositely to the direction of the pull of the spring (27), said handle preferably projecting from the base plate (10) at the side of the opening (13).

## Revendications

1. Fraiseuse portative (2) comprenant un boîtier de moteur (3), une semelle (10) d'appui sur la pièce percée au centre d'une ouverture (13) de passage d'une fraise (16) montée dans un réceptacle (15) au niveau de la face inférieure du boîtier (3) et entourée d'une douille amovible de guidage (18) qui, en position de montage, dépasse par rapport à la semelle, caractérisée en ce que la douille de guidage (18) peut être fixée à la semelle (10) par l'intermédiaire d'une liaison à emmanchement (17) équipée d'un verrouillage à baïonnette (34).

2. Fraiseuse portative selon la revendication 1, caractérisée en ce qu'une bague de serrage (26) comporte plusieurs dents de serrage (28) et pouvant tourner selon un angle limité, est reliée à la semelle (10).

3. Fraiseuse portative selon la revendication 2, caractérisée en ce que la bague de serrage (26) est poussée dans sa position extrême de verrouillage par l'action d'un ressort (27).

4. Fraiseuse portative selon les revendications 2 ou 3, caractérisée en ce que la semelle (10) au niveau de son ouverture (13) comporte des butées (22) par rapport à la direction axiale, coopérant avec les dents de serrage (28) de l'anneau de serrage (26).

5. Fraiseuse portative selon la revendication 4, caractérisée en ce que la douille de guidage emmanchable (18) présente des surfaces de coincement (33) qui peuvent être amenées entre les dents de serrage (28) et les butées (22).

6. Fraiseuse portative selon une des revendications 2 à 5, caractérisée en ce que la douille de guidage (18) présente des évidements (32) servant au passage des dents de serrage (28).

7. Fraiseuse portative selon la revendication 5, caractérisée en ce que les dents de serrage (28), les butées (22) ou les surfaces de coincement (33) ou plusieurs de ces éléments présentent des pentes.

8. Fraiseuse portative selon une des revendications 4, 5 ou 7, caractérisée en ce que les butées (22) et la douille de guidage (18) présentent sur leurs bords des éléments accordés en forme de saillies (23) radiales ou axiales ainsi que des évidements (24), empêchant une rotation.

9. Fraiseuse portative selon une des revendications 3 à 5, 7 et 8, caractérisée en ce que la bague de serrage (26) est équipée d'une manette (31) qui permet de faire tourner cette bague à l'opposé de la direction de traction du ressort (27) et qui dépasse au-dessus de la semelle (10), de préférence a côté de l'ouverture (13).
